# EUROPEAN PATENT APPLICATION

(11) **EP 0 774 201 A1**
(43) Date of publication of application: **21.05.1997**
(21) Application number: 96830583.9
(22) Date of filing: 15.11.1996
(51) Int. Cl.: A01B 63/00, A01B 59/06

(54) **Quick coupling system, particularly to couple tools to agrarian tractors**

(30) Priority: 17.11.1995 IT RM950761
(71) Applicant: Cavalli, Roberto Giacomo, 09031 Arbus (CA) (IT)
(72) Inventor: Cavalli, Roberto Giacomo, 09031 Arbus (CA) (IT)
(74) Representative: Iannone, Carlo Luigi

(57) **Abstract**

The invention relates to a quick coupling system, particularly for coupling tools to agrarian tractors, provided with three coupling points, namely two lower points (8) and one central upper or third coupling point (23), the two lower coupling points (8) being provided at the end of the tractor lifter arms (9), said system comprising a first double telescopic rod (1), coupled at the rear with the tractor and bearing on the front part said third coupling point (23), a double telescopic support (5) providing two rods converging upward, having the two lower ends respectively coupled to said arms (9 of the lifter and coupling upperly in a single point with said first double telescopic rod (1), provided with an upper stop (7), two double telescopic arms (11), one for each of said lifter arms (9), lower coupling means (8), provided on the front end of said lifter arms (9), disjunction means (14, 15, 16, 17, 18, 19) for the disjunction of said first double telescopic rod (1), of said double telescopic arms (11) and of said means for positioning said lifter arms, respectively, and means for blocking said first double telescopic rod (1) and said double telescopic arms (11), respectively, said disjunction and locking means being provided within reach from the worker position.

## Description

The present invention relates to a quick coupling system, particularly to couple tools to agrarian tractors.

More specifically, the invention concerns to a system of the above kind allowing to make easier the insertion and the removal of the agrarian tools which are normally coupled with the hydraulic lifting fixture of the agrarian tractors.

The following description will make mainly reference to the use of the system for agrarian tractors, but it is well evident that said system could be also used in different cases, and that therefore it must not be unduly considered limited to this use.

It is well known to all those skilled in the agrarian field, how much it is tiring to attach and detach the fixtures from the agrarian tractor, mainly when it is necessary to repeat the operation many time each day.

It causes noticeable lost of times and often it determines mishaps to the operator.

It is also known how at present lifting arms are provided by the manufacturer on very powerful tractors, more than 100 kV, said arms being provided with a sort of hook replacing the traditional whirl.

Said hook element make just a little easier the coupling and disjunction of the tools, but it requires a noticeable precision by the operator during the approaching, and in anycase the manual intervention of the operator both to adjust the opening of the arms before and after the coupling and to couple and adjust the third point rod.

Furthermore, said operation subsequently requires further adjustments.

In this contest it is included the solution suggested according to the present invention which has the main object of making extremely easy and convenient the coupling and disjunction operations of the tool from the tractor.

The solution proposed according to the present invention is completely automatized and the worker, being comfortably seated on his tractor, can couple and disjoint any tool, lengthen and shorten in any moment the third point rod in order to differently incline the tools and laterally move the same according to the specific needing.

Furthermore, the solution suggested according to the present invention provides that, by a partial application on tractors having the lifter arms already provided with a hook, it is possible to noticeably improve their practical use.

These and other results are obtained according to the present invention by a system or assembly of tools which is simply applied by some pins to the arms of the hydraulic lifter and to the third point (fixed point) of the tractor, thus allowing, without the need of modifications, to quickly couple any agrarian tool, even if having different dimensions, simply adding some bushings inserted within the tool pins.

It is therefore specific object of the present invention a quick coupling system, particularly for coupling tools to agrarian tractors, provided with three coupling points, namely two lower points and one central upper or third coupling point, the two lower coupling points being provided at the end of the tractor lifter arms, said system comprising a first double telescopic rod, coupled at the rear with the tractor and bearing on the front part said third coupling point, a double telescopic support providing two rods converging upward, having the two lower ends respectively coupled to said arms of the lifter and coupling upperly in a single point with said first double telescopic rod, adjustment means for adjusting the position of said lifter arms, two double telescopic arms, one for each of said lifter arms, lower coupling means, provided on the front end of said lifter arms, disjunction means for the disjunction of said first double telescopic rod, of said double telescopic arms and of said means for positioning said lifter arms, respectively, and means for blocking said first double telescopic rod and said double telescopic arms, respectively, said disjunction and locking means being provided within reach from the worker position.

Preferably, according to the invention, said first double telescopic rod provides an adjustment ring nut for the adjustment of its length and extension restricting **spring means.**

Particularly, said extension restricting **spring means** are comprised of a spring provided within a tube provided above said first telescopic rod.

Furthermore, according to the invention, said third coupling point provides a quick coupling head, substantially V-shaped to promote the coupling, a claw, which surrounds the pin when is closed, and a striker, pivoted on said head and locking the hook in the closure position.

Always according to the invention, said double telescopic support provides a pair of telescopic rods converging upward and provided with an upper stop.

Still according to the invention, said two double telescopic arms can be comprised each of two arms telescopically sliding and parallel coupled each other, the upper one acting as a pin for the semi - revolution of the ring nuts and innerly provided with a spring, and another slotted arm and two adjustment and fixing ring nuts for the length of the same telescopic arm.

Always according to the invention, said lower coupling means are comprised of two "quick couplings" provided with coupling means for the coupling with said lifter arms.

According to an embodiment, said quick couplings are provided with a hook coupling with the tool pin and with a hook locking bushing.

Furthermore, according to the invention, said means for the disjunction of said first rod and of said telescopic arms can be comprised of a lever and of connection cables.

Further, according to the invention, said means for the disjunction of the means for positioning said double support can be comprised of the same disjunction means already mentioned, provided with further connection cables.

Always according to the invention, said locking means can be comprised of a second lever with the relevant cables for the connection with the different means.

The present invention will be now described, for illustrative but not limitative purposes, according to its preferred embodiments, with particular reference to the figures of the enclosed drawings, wherein:

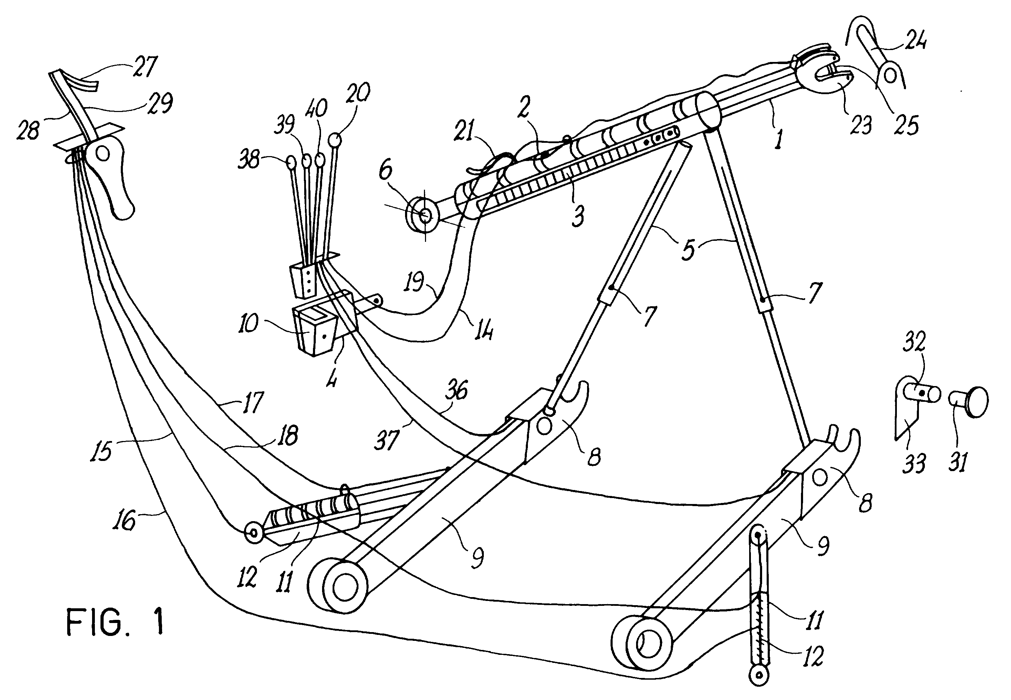

figure 1 is a schematic view of an embodiment of the system according to the invention;
figure 2 schematically shows, partially in exploded view, a particular of the system according to the invention;

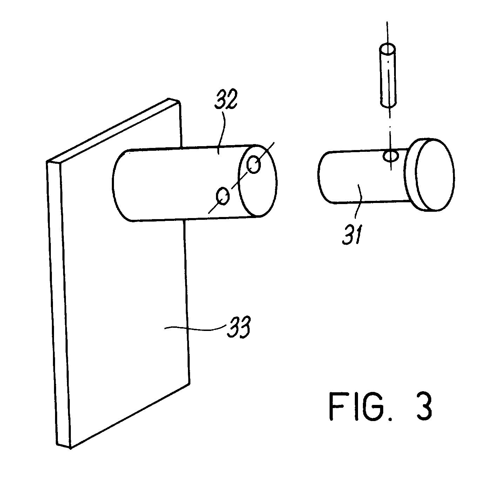

figure 3 schematically shows a further particular of the system according to the invention;
figure 4 is an exploded view of another particular of the system according to the invention;
figure 5 schematically shows, in exploded view, a further particular of the system according to the invention;
figure 6 is an exploded view of another particular of the system according to the invention; and
figure 7 is an exploded view of a further particular of the system according to the invention.

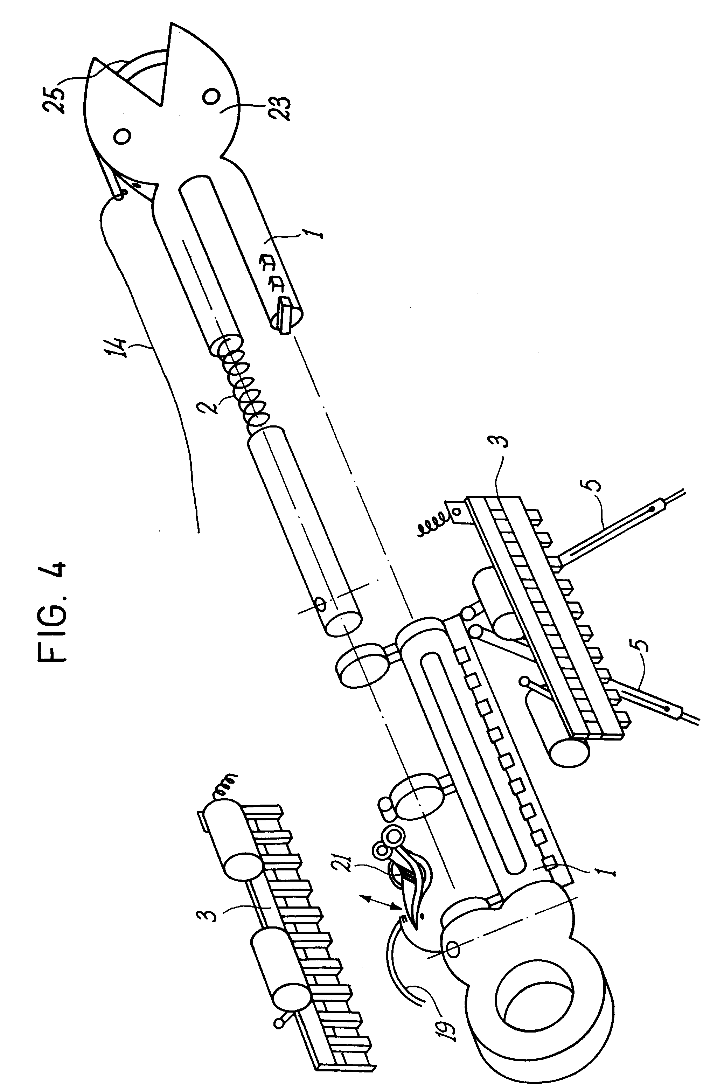

Referring now to the figures of the enclosed drawings, the system according to the invention comprises an extensible, double telescopic third point rod 1, subject to the action of a spring 2 and adjustable in length by a ring nut 3, provided with an automatic hooking system (which can be clearly seen in figure 4), supported by a telescopic double support 5.

The spring 2 within the third point telescopic rod 1 allows, by projecting, to obtain a sufficient extension so as to be able to hook the upper pin (not shown) of the tool in such a way that the quick couplings, which are no more in a vertical position on the head, do not hamper the approaching of the tool.

Instead, the ring nut locks in the desired length of the third point rod 1 in order to obtain an automatic adjustment of the length of the same rod 1.

Said telescopic support 5 allows to maintain the third point rod 1 suspended but movable in order to be able to adjust its height by the motion of the hydraulic lifter (non shown).

The double telescopic support 5 is pivoted on the telescopic rod 1 and rests on the quick couplings 8 disposed on the lifter arms 9, and it is further provided in such a way not to hamper the use of the universal joint of the tow bar.

The double telescopic support is pivoted above on the third point rod 1 and at the bottom is hooked to the quick couplings 8: once it is hooked to the third point, the quick couplings 8 are lifted, preventing the motion of the third point rod 1 already hooked, but independent.

At the rear, said telescopic rod 1 is provided with a coupling 6, for the coupling with the tractor (not shown).

The quick couplings 8 are comprised of a kind of mechanical quick coupling provided with a projecting hook having an embracing and self-locking action, said hook embracing and retaining the pin of the tool by the action of the upward motion of the lifter.

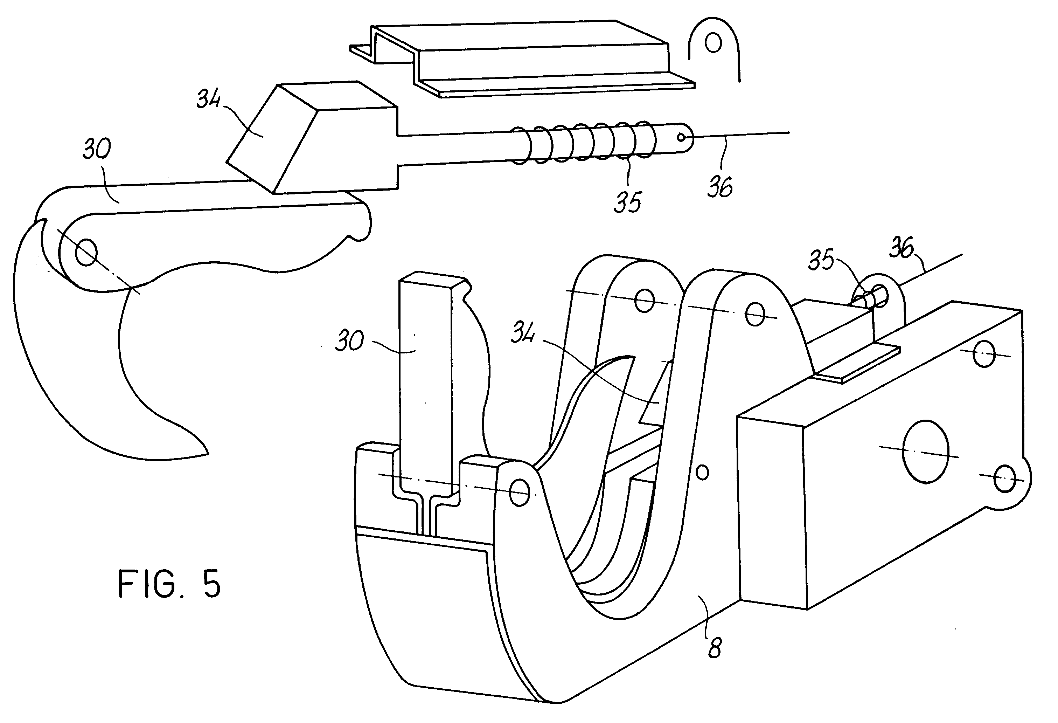

In the figures, and particularly in figure 5, an embodiment of a quick coupling (quick coupling) 8 is shown.

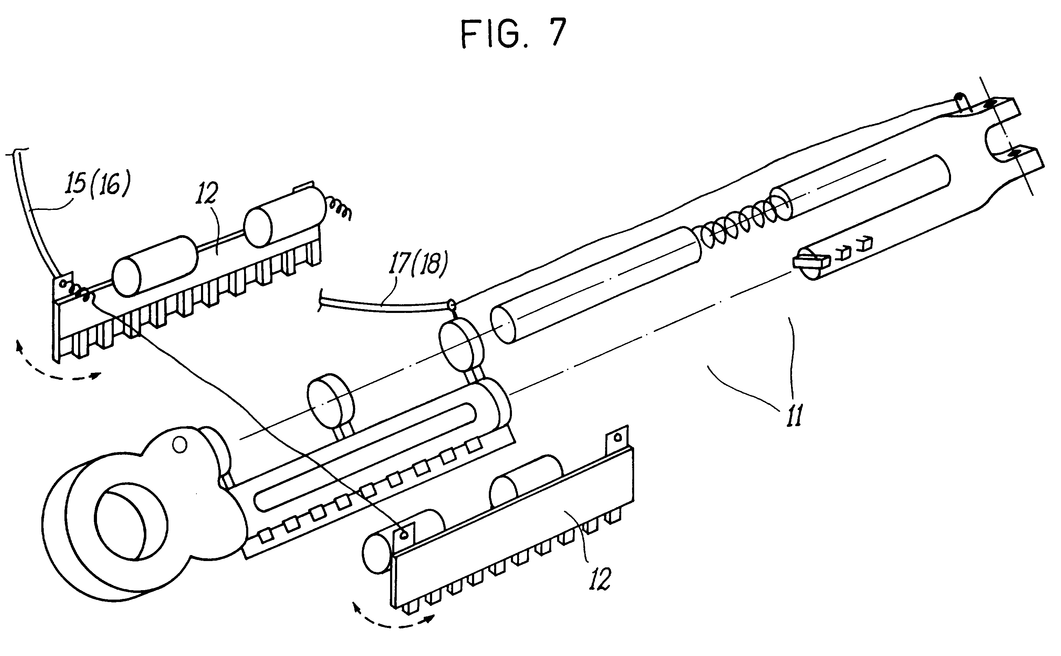

The system according to the invention further comprises two double telescopic arms (tension rods) 11 (see figure 7) automatically adjusting, by a ring nut 12 with a specific automatism, the lateral displacement of the arms 9 and the locking of the same in the desired position.

The double telescopic arms 11, once released from the ring nut 12, thrust the lifter arms 9, which converge toward the centre up to abutting against the skirts mounted on the pins of the tool as a ledge in order to allow their adjustment without any manual intervention.

The divergent lateral displacement of the lifter arms 9 is instead obtained by a double lever provided within the carriage brake housing by two lifting cables and thus the opening of the ring nut 12 and the traction of the cable 17 (18) returning the double telescopic arm.

Instead, the disjunction step occurs by a plate 4, provided with a seat for a lever 10, welded to a pin replacing the coupling pin for the fixed point of the third point rod 1, this lever, adjustable in height, will control three cables for the quick and automatic release of the tool either from the tool and from the ground and it is very important that it remains within a reduced space without hampering the other movements.

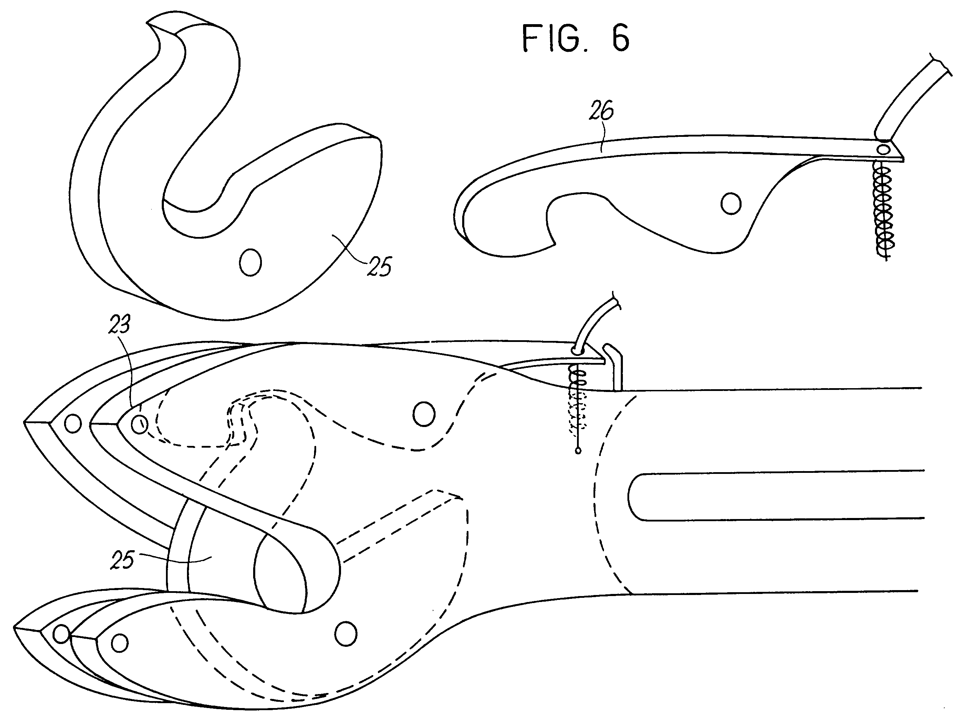

In figure 7, a particular of a double telescopic arm 11 is shown, while in figure 6 the hooking head 23 for the third point is shown.

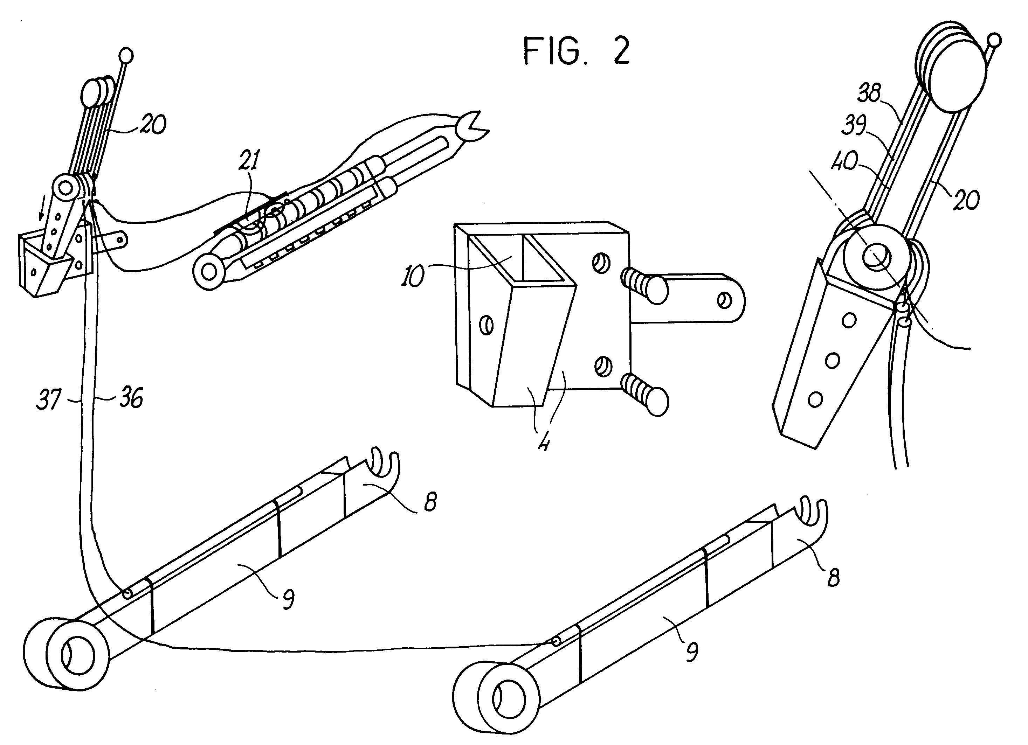

Instead, in figure 2 it is shown the particular of the automatic disjunction lever for the tools.

The operation of the system according to the invention will be described in the following.

The worker, operating the tractor with the reverse gear, acts on the lever 20 which, operating the lever 21, releases and lifts the ring nut 3 allowing that the rod 1, under the action of the spring 2 to extend of an amount sufficient to allow to the quick couplings 8 not to hamper the hooking of the upper pin of the tool with the head 23, see figure 4, which is supported along with the third point rod 1 by the telescopic rods 5 and can be adjusted in height simply operating the lifter of the tractor (not shown) without the need of acting with a high precision, since the V shape of the head 23 facilitates the coupling of the tool 24 pin with the hook 25 by the tractor thrust.

Said head 23 of the third point rod embraces the tool pin by the semi - revolution of its hook 25, in order to realise a slot by its connection with the inner seat of the head 23.

The lever 21 provided on the upper portion of the third point rod 1 facilitate the effort to lift the ring nut 3.

The spring 2, provided between the lever 21 and the ring nut 3 lifting and locking mechanism is entrapped and pivoted on the same traction cable 19 in order to induce the return of the lever 21 at the position close to the third point rod and the closure of the locking mechanism of the same ring nut 3.

Furthermore, said ring nut 3 rotating about the upper tube of the rod 1 makes a semi-rotation lifting or lowering in order to allow the adjustment and locking of the rod 1 bearing the catching head 23.

Thus, the third point is hooked by the striker 26 locking the hook 25.

Said striker 26, pivoted within the head 23, overlapping on the hook 25, automatically locks the same.

Further, the V shape of the head facilitates the insertion of the upper pin of the tool.

Now, lowering the lifter, the reverse motion is done until the quick couplings 8 are approximately under the lower pins (not shown) of the tool; then, the lever 20 is released, freeing the ring nut 3 to be lowered, thus locking the rod 1 pin already in the right position to use the tool.

Then, acting on the lever 27, the ring nut 12 is opened on an arm 11 (tension rod) (see also figure 7), and acting on the lever 28 or on the lever 29 pulling the cable 17 or 19, the opening of the lifter arms 9 is adjusted on the basis of the needing, said arms approaching the quick couplings 8 to the tool pins provided with bushings.

Now the hook 30, pivoted on the tip of the quick coupling 8, by its semi-rotation due to the pressure of the tool pin determined by the lifting of the hydraulic lifter, induces the embracing of the pin on the lower portion of the hook 30 in order to hook the same pin.

Said quick couplings 8 are so shaped to be fixed to the arms 9 of the lifter by the simple introduction of a pin passing through the quick coupling 8 and the **whirl** of the tractor arm, thus obtaining a quick and simple mounting.

Further, the fixing of the quick coupling to the lifter arm 9 by the simple pin has the aim of allowing a determined swinging mobility of the quick coupling 8 for those tools having lower pins offset each other.

Moreover, the particular **V** shape of the quick coupling with the hook 30 lifted ready to be hooked, has the aim of facilitating the introduction of the tool within the quick coupling 8.

Furthermore, the bevelled shape of the hook 30 allows to avoid that its semi - revolution is hampered also after wear or deformations due to squeezing of its parts.

The bevelled shape of the quick couplings 8 has also the aim of facilitating the introduction of the tool pins within the seat of the same quick coupling 8.

The hooking of the quick couplings 8 is realised in such a way to obtain optimum coupling and disjunction.

The bushing 32 (figure 39 mounted on the tool pin overlaps on the first bushing 31 offsetting the inlet hole for the pin by its rotation by inertia due to the weight of the skirt 33 acting as ledge, thus preventing the exiting in order to realise an integral body with the tool pin.

The quick coupling 8 of figure 5 has a wider shape at the introduction point of the lifter arm and narrower at the hooking point of the tool pin to facilitate its fixing.

The hook 30 of the quick coupling 8 shown in figure 5 has a thickness lower than its lower portion in order to avoid to weaken the bearing structure of the quick coupling 8.

Furthermore, on the tip of the hook 30 a recess is provided which matches, due to its rotation, with the fixed pin diametrically opposed with respect to the rotation pin, in order to create an integral ring around the tool pin.

The lock bolt of the quick coupling slides along the frame in a position opposite with respect to the position of the hook going back under the thrust of the hook 30 and then under the action of a spring it is positioned above the hook 30 in order to lock it in the closed position.

The lock bolt 34 slidable within the quick coupling 8 and thrusted by a spring 35 and linked to a cable 36 (37) has the aim of allowing the opening of the quick coupling 8 directly from the tractor.

Going on with the description of the operation, now the arms 9 must be lifted and the pins will be embraced and hooked by the hooks 30 of the quick coupling 8 and automatically the closure systems will snap on.

Also during this step it is not necessary to be too much precise since the quick coupling 8 with the hook 30 opened provide a substantially V shaped insertion seat, thus allowing to the worker a noticeable mistaken play during the approaching manoeuvre of the tool.

The hooks 30 will be put and retained in a position ready for catching (or ready for coupling) by simple automatic mechanism operated by the disjunction action of the tool that will occur lowering the lifter arms 9 and operating the levers 38, 39, 40 which by the cables 14, 36 and 37 will release the closure systems both from the third point head 23 and from the quick couplings 8.

The double lever provided within the carriage brake housing allows, by the independent rotation of the upper lever, to operate the releasing and the lifting of the arm ring nut in order to avoid the automatic convergence, under the effect of the spring provided within the arm tube, of the hydraulic lifter arms, while the lever 28 or 29 provided within the carriage brake housing, induces the divergence of the lifter arms by the traction of the cables returning the telescopic rods 5 in order to approach or to move away the quick couplings with respect to the lower pins of the tool.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Quick coupling system, particularly for coupling tools to agrarian tractors, provided with three coupling points, namely two lower points and one central upper or third coupling point, the two lower coupling points being provided at the end of the tractor lifter arms, characterized in that it comprises a first double telescopic rod, coupled at the rear with the tractor and bearing on the front part said third coupling point, a double telescopic support providing two rods converging upward, having the two lower ends respectively coupled to said arms of the lifter and coupling upperly in a single point with said first double telescopic rod, adjustment means for adjusting the position of said lifter arms, two double telescopic arms, one for each of said lifter arms, lower coupling means, provided on the front end of said lifter arms, disjunction means for the disjunction of said first double telescopic rod, of said double telescopic arms and of said means for positioning said lifter arms, respectively, and means for blocking said first double telescopic rod and said double telescopic arms, respectively, said disjunction and locking means being provided within reach from the worker position.

2. System according to claim 1, characterized in that said first double telescopic rod provides an adjustment ring nut for the adjustment of its length and extension restricting **spring means**.

3. System according to claim 2, characterized in that said extension restricting **spring means** are comprised of a spring provided within a tube provided above said first telescopic rod.

4. System according to one of the preceding claims, characterized in that said third coupling point provides a quick coupling head, substantially V-shaped to promote the coupling, a claw, which surrounds the pin when is closed, and a striker, pivoted on said head and locking the striker in the closure position.

5. System according to one of the preceding claims, characterized in that said double telescopic support provides a pair of telescopic rods converging upward and provided with an upper stop.

6. System according to one of the preceding claims, characterized in that said two double telescopic arms are comprised each of two arms telescopically sliding and parallel coupled each other, the upper one acting as a pin for the semi - revolution of the ring nuts and innerly provided with a spring, and another slotted arm and two adjustment and fixing ring nuts for the length of the same telescopic arm.

7. System according to one of the preceding claims, characterized in that said lower coupling means are comprised of two "quick couplings" provided with coupling means for the coupling with said lifter arms.

8. System according to claim 7, characterized in that According to an embodiment, said quick couplings are provided with a hook coupling with the tool pin and with a hook bushing.

9. System according to one of the preceding claims, characterized in that said means for the disjunction of said first rod and of said telescopic arms are comprised of a lever and of connection cables.

10. System according to one of the preceding claims, characterized in that said means for the disjunction of the means for positioning said double support are comprised of the same disjunction means already mentioned, provided with further connection cables.

11. System according to one of the preceding claims, characterized in that said locking means are comprised of a second lever with the relevant cables for the connection with the different means.

12. System according to one of the preceding claims, characterized in that said means for promoting the coupling of the pins with the tools are comprised of bushings.
